(19) Europäisches Patentamt
European Patent Office
Office européen des brevets

(11) Publication number: **0 025 230**
**B1**

(12) **EUROPEAN PATENT SPECIFICATION**

(45) Date of publication of patent specification: **14.09.83**

(51) Int. Cl.³: **C 03 B 37/025,**
**C 03 C 17/02**

(21) Application number: **80105389.3**

(22) Date of filing: **09.09.80**

(54) **Method of and apparatus for producing optical fibre preforms.**

(30) Priority: **10.09.79 IT 6878979**

(43) Date of publication of application:
**18.03.81 Bulletin 81/11**

(45) Publication of the grant of the patent:
**14.09.83 Bulletin 83/37**

(84) Designated Contracting States:
**BE CH DE FR GB LI NL SE**

(56) References cited:
**DE - A - 2 447 353**
**DE - A - 2 637 937**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Roba, Giacomo**
**V. Allegro, 63/5**
**Cogoleto Genova (IT)**
Inventor: **Vergnano, Paolo**
**V. le Cappuccini, 13**
**Chieri Torino (IT)**

(74) Representative: **Riederer Freiherr von Paar zu Schönau, Anton**
**Freyung 615 Postfach 2664**
**D-8300 Landshut (DE)**

**EP 0 025 230 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Method of and apparatus for producing optical fibre preforms

The invention relates to a method of producing optical fibre preforms by means of deposition of several cylindrical layers of vitrifiable material, wherein each layer is obtained:

— by transmitting a first liquid able to supply constituent material for glass production onto a support having a cylindrical surface inside a chamber under a controlled atmosphere;
— by separately transmitting an oxidant into said chamber;
— by transmitting the liquid together with the oxidant towards the cylindrical support surface and bringing there the liquid and the oxidant in contact with each other;
— by evacuating all residual gas from said chamber; and,
— after having thus finished a multi-layer glass body, eliminating residual water from the still unvitrified preform, heating said unvitrified preform to make it collapse to a solid cylindrical rod and heating it to complete vitrification,

and to an apparatus for producing optical fibre preforms, able to carry out the method, said apparatus comprising a chamber for depositing the layers, further high temperature ovens to heat said preform for obtaining a solid cylindrical glass rod, means to generate a flow of a dehydrating material for residual water elimination and finally ovens for the complete preform vitrification.

The process for optical fibre production comprises two main stages: one in which a cylindrical preform is realized having a radial refractive index profile similar to the one of the fibres, and the other in which the temperature is increased and the preform is pulled into optical fibres.

The first stage requires much care in order to obtain high-quality fibres as to mechanical and transmissive properties. More particularly it is necessary to reduce to the minimum the metallic or water contamination of the preform in order to avoid the high losses due to absorption in the wave length range used in telecommunications.

To attain these aims, several methods have been developed, that besides ensuring high material purity, allow good growth rate of the preform.

A widely known method is based on the planar deposition of oxides obtained from chemical synthesis of vapour-phase reactants. This method named CVD (Chemical Vapour Deposition) has at least two modified versions: ICVD and OCVD.

The first method relates to the deposition on the inner surface of a supporting tube (inside CVD), while the second method relates to the deposition on the outer surface of a supporting mandrel (Outside CVD).

In both cases chemical reactants are sent towards the support and oxidized by a burner flame in an atmosphere enriched with oxygen.

From the reaction powdered, silicon dioxide (or silica) is obtained, that is suitably doped with oxides of other elements according to the wanted refractive index. Typical chemical reactions are described in the following chemical equations:

$$Si\,Cl_4 + O_2 \rightarrow Si\,O_2 + 2\,Cl_2$$
$$2\,B\,Cl_3 + 3/2\,O_2 \rightarrow B_2\,O_3 + 3\,Cl_2$$
$$2\,PO\,Cl_3 + 3/2\,O_2 \rightarrow P_2\,O_5 + 3\,Cl_2$$
$$Ge\,Cl_4 + O_2 \rightarrow Ge\,O_2 + 2\,Cl_2$$

In case of ICVD process, the reactants flow inside the supporting tube, made of silica glass, and the oxidation reactions, with subsequent deposition, are obtained by translation in the direction of the reactant flow of a high-temperature annular zone.

After a suitable number of deposition cycles the preform has a tubular shape and a spongy structure of milky colour or it is already vitrified, depending on the temperature at which the previous operations have been carried out. At this point, the preform is collapsed by means of high temperature to a solid transparent rod.

If OCVD process is used, the deposited material solidifies on the support by translating a high-temperature annular zone, together with the nozzles from where the reactants flow, and by rotating the support around its axis. The preform, that presents in this phase a spongy and milky structure, is separated from the support and undergoes a number of operations designed to eliminate water molecules. Said molecules, if still present in the optical fibres might cause serious absorption losses.

Finally the preform is made to collapse at high temperature to a cylindrical rod and then is drawn into an optical fibre.

Due to oxidation reactions these processes require high temperature, which entail technical problems and render the apparatuses very complex.

More particularly, automatic-control systems must be provided able to keep the temperature values within certain ranges, beyond which irregularities of the process or support deformation can arise.

Besides the use of vapour-phase reactants limits deposition rate to a value that cannot be exceeded, due to the reduced density of the carried material.

Finally, excessive flow increase can entail the risk of incorporating reactant bubbles inside the structure of the preform, mainly in the processes in which vitrification occurs at the same time as the deposition.

It is also known (DE—A—26 37 937), as initially stated, to deposit a layer from the liquid phase, whereupon the layer is thermally decomposed or oxidized. Herein, a relative rotation between the support surface and the means delivering the liquids to said support surface is carried out. If several layers are to be deposited, the material which had been premixed for each layer according to the respective requirements so as to result in a particular refractive index undergoes the whole procedure for each single layer including the thermal decomposition.

It is also known (DE—A—24 47 535) to apply layers of doping material to the glass surface. Also vitrious multicomponent oxide layers can be applied to the surface, but also here, one mixture for one cylindrical layer is used. If several layers are to be applied one above the other, the thermal treatment is carried out between each partial layer application.

It is an object of the invention to overcome the disadvantages of the prior art of producing optical fibre preforms and to permit a chemical reaction to take place at low temperature between liquid reactants, allowing a simplification of the apparatus and a higher rate of the preform growth.

This object is attained by the invention which is characterized in that besides the first liquid able to supply the constituent material for the glass production, a second liquid, able to supply a doping material for the variation of the refractive index is also transmitted to the cylindrical support surface and is brought into contact with the first liquid and the oxidant while effecting a relative rotation and translation between the cylindrical support surface and the means delivering the liquids and oxidant to the cylindrical support surface at room temperature so as to provide for a uniform covering with the materials; and by varying the flow relation of the first and the second liquid as a function of the required refractive index profile.

The apparatus of the invention for carrying out this method is characterized in that the chamber for depositing the layers is connected with one or more tanks of compressed inert gas, communicating by valves and flow meters with vessels containing said first and second liquids which through confluent tubes arrive at a first nozzle, contained within the chamber which constitutes a controlled-atmosphere chamber, said first nozzle being integral with a second nozzle communicating by tubes, a valve and a flow meter with a container of said oxidant under pressure, said first and second nozzles being directed to the same point on said cylindrical support surface, and in addition means to provide relative rotation and translation between said cylindrical surface and said nozzles.

The present invention will become clearer from the following description of a preferred way of embodiment thereof given by way of example and not in a limiting sense, taken in connection with the annexed drawings in which:

Fig. 1 is a cross sectional view of a first example of the apparatus;

Fig. 2 is a cross sectional view of a part of a second example of apparatus;

Fig. 3 is a transverse sectional view of a preform produced by using the apparatus of Fig. 1;

Fig. 4 is a transverse sectional view of a preform produced by using the apparatus partially represented in Fig. 2.

In Fig. 1 references 7 and 8 denote two vessels containing liquid reactants 9 and 10. One of said liquids (e.g. $Si\ Cl_4$) supplies the material for preform production, while the other (e.g. $Ge\ Cl_4$) supplies the dopant for radial variations of the refractive index. Liquids 9 and 10 are led to the chamber where the chemical reaction takes place, by means of two tubes 11 and 12, placed inside vessels 7 and 8 and having inlets located near the bottom beneath the liquid surface. The pressure necessary to the reactant transfer into the reaction chamber is obtained by a usual inert gas previouslyi compressed in a container, that is not shown in the drawing. This gas arrives through tubes 1 and 2, flow meters 3 and 4 and valves 5 and 6 inside the vessels, above the liquid surface, generating flows of controllable value in tubes 11 and 12.

Through hoses 13 and 14 confluent in a y-shaped joint, reactants arrive at a tube 15 that enters inside reaction chamber 25. Outside tube 15, another coaxial or parallel tube 18 is provided leading by hose 19, valve 20 and flow meter 31 to tube 21, through which an oxidant under pressure is drawn, for instance water or steam, from a container not represented in the drawing. Tubes 15 and 18 are joined inside chamber 25 with two coaxial nozzles 16 and 17, serving to spray reactants towards the lateral inner surface 26 of the chamber that forms the support of the preform.

This cylindrical surface, preferably made of silica glass, forms with the upper base an airtight chamber. Tubes 15 and 18 enter the chamber through dynamic airtight opening, while residual gases derived from the reaction among the reactants are extracted by tube 22, connected through hoses 23 to tube 24 leading to a conventional suction pump, not represented in the drawing. Tubes 15 and 18 can axially translate with respect to reaction chamber 25, together with nozzles 16 and 17, so that material derived from the chemical reaction is uniformly deposited on the inner surface of the support. For the same purpose, the reaction chamber can rotate around its axis. Mechanical devices allowing the axial translation of nozzles 16 and 17 and rotation of chamber 25 have not been represented, since their making is well-known and is not a problem to the skilled in the art. Of course for the good operation of the apparatus the mutual movements among the different parts are important, while the absolute movements are not. In this case an apparatus in which the reaction chamber translates along the axis or in which the movements are effected in a more or less complex way by different parts of the apparatus is an obvious variant.

Fig. 2 shows a part of a second example of apparatus for producing optical fibre preforms. Identical references denote basically identical details in Figs. 1 and 2.

The result of the reaction between the reactants fed by tube 15 and the oxidant fed by tube 18 is deposited on the outer surface of a mandrel 28, that is another type of preform support. It can be made of graphite or quartz. Also in this case mechanical devices are provided not represented in the drawing, able to effect a translation of nozzles 16 and 17 with respect to support 28 and to rotate the support around its axis. In this way the vitrifiable material can be uniformly deposited to a constant thickness around the whole cylindrical surface of mandrel 28. The chemical reaction and the deposition must take place also for this apparatus in a controlled-atmosphere chamber 29 in order to avoid any possible contamination of the preform. In this way, an air-tight chamber is provided, equipped with access for the tubes by which the reactants are transferred and with an output for residual gas suction.

Now the method of producing optical fibre preforms by using the illustrated apparatus will be described. The liquid reactants is transmitted under pressure at room temperature through tube 15 to nozzle 16, from which it comes out subdivided into atomized droplets and it reacts with the oxidant emitted by nozzle 17, according to the following chemical equation:

$$Si\ Cl_4 + 4\ H_2O \rightarrow SiO_2 \cdot 2\ H_2O + 4\ H\ Cl$$

Hydrated silica $Si\ O_2 \cdot 2(H_2O)$ is deposited on the inner or outer surface of the cylindrical support, dependent on the used apparatus, and adheres to it due to colloidal and electrostatic forces that occur among the particles. Due to the rotation of the support and to the translation in both directions of the nozzles, various cylindrical layers of constant thickness are deposited to the total required thickness of the preform wall.

In the case of inside deposition, the rotation of the support around its axis favours the adhesion among the particles of the deposited material, due to compression originated from centrifugal force.

Considerable sizes can be obtained due to lack of inner stresses which increasing preform diameter would normally give rise to, thereby causing cracks. This positive result is obtained as an effect of low temperature at which the present process is effected, whose product is a preform having an essentially porous structure without superficial or inner stresses.

To modify the refractive index in radial direction, to the reactant a dopant is added, that has been introduced into the reaction chamber by means of another tube and another nozzle, or yet, as depicted in Figures 1 and 2, by the same tube 15 and the same nozzle 16.

Through valves 5 and 6 the flows of reactant, contained in vessel 7, and of dopant, contained in vessel 8, are controlled in order to obtain suitable ratios between the concentration of oxides forming the preform.

As a consequence, the wanted profile of refractive index can be obtained in the preform at the process end and therefore in optical fibers. More particularly, by the apparatus of Fig. 1 in which the preform growth takes place towards the rotation axis, the dopant is sent with greater concentration towards the end of the process, so as to obtain the minimum value of refractive index in the most external zones. On the contrary, by the apparatus of Fig. 2, the dopant will be sent with maximum concentration at the beginning of the process.

The typical reaction apt to obtain an oxide able to increase the refractive index is expressed in the following chemical equation:

$$Ge\ Cl_4 + 4\ H_2O \rightarrow GeO_2 \cdot 2\ H_2O + 4\ H\ Cl$$

Analogous results can be obtained beginning from aluminium and phosphorous chlorides, while refractive index reduction can be obtained by the use of boron chloride.

By the apparatus depicted in Fig. 1 a preform can be obtained with transverse section as shown in Fig. 3.

In that drawing reference 26 denotes the cylindrical hollow support on whose inner surface the deposition of vitrifiable material is effected, denoted by 27, that afterwards is pulled to optical fibre. By the apparatus of Fig. 2 a preform is obtained having a transverse section of the kind represented in Fig. 4. The support, always denoted by reference 28, is now inside the silica glass preform, denoted by reference 30.

During this phase the preform has porous structure, it consists of milky, non-transparent glass and contains water molecules.

The following operation, necessary in the case depicted in Fig. 4, is the support removal, effected to avoid irregularities in the refractive index profile of the fibre. Another problem to solve is the elimination of water molecules incorporated in the preform pores. A possible method simply consists in introducing the preform into an oven and making dry gas to flow, so as to help water evaporation and allow vapour outgoing. A more efficient method makes use of chemical reactions with the addition of dry gas flow in a high-temperature oven. Examples of possible reactions are given by the following chemical equations:

$SiO_2 \cdot 2H_2O+2SOCl_2 \rightarrow SiO_2+4\ HCl+2SO_2$
$SiO_2 \cdot 2H_2O+C\ Cl_4 \rightarrow SiO_2+C\ O_2+4\ H\ Cl$
$SiO_2 \cdot 2\ H_2O+2\ Cl_2 \rightarrow SiO_2+4\ H\ Cl+O_2$

Then an oven is provided equipped with means apt to generate a flow of dehydrating gases that penetrates into the pores of spongy structure of the preform.

The preform, that during this phase has a tubular shape, is thus transferred into a high-temperature oven, where it is collapsed to a rod and is completely vitrified. Then a solid and transparent structure is obtained with a radial profile of the refractive index equal to the one desired for the optical fibres.

Fibre pulling can now take place as usual, beginning from the inferior meniscus of the preform in high temperature oven.

## Claims

1. Method of producing optical fibre preforms by means of deposition of several cylindrical layers of vitrifiable material, wherein each layer is obtained:

— by transmitting a first liquid able to supply constituent material for glass production onto a support having a cylindrical surface inside a chamber under a controlled atmosphere;
— by separately transmitting an oxidant into said chamber;
— by transmitting the liquid together with the oxidant towards the cylindrical support surface and bringing there the liquid and the oxidant in contact with each other;
— by evacuating all residual gas from said chamber; and,
— after having thus finished a multi-layer glass body, eliminating residual water from the still unvitrified preform, heating said unvitrified preform to make it collapse to a solid cylindrical rod and heating it to complete vitrification, characterized in that
— besides the first liquid able to supply the constituent material for the glass production, a second liquid, able to supply a doping material for the variation of the refractive index is also transmitted to the cylindrical support surface and is brought into contact with the first liquid and the oxidant while effecting a relative rotation and translation between the cylindrical support surface and the means delivering the liquids and oxidant to the cylindrical support surface at room temperature so as to provide for a uniform covering with the materials; and
— by varying the flow relation of the first and the second liquid as a function of the required refractive index profile.

2. Method as in claim 1, characterized in that said cylindrical support surface is removed from the preform before complete vitrification.

3. Method as in claim 1 or 2, characterized in that said cylindrical support surface rotates around its axis at such a speed that a strong adhesion to it of said constituent and dopant materials takes place.

4. Method as in any of claims 1 to 3, characterized in that residual water is eliminated by chemical reaction with a dehydrating material the transformation products of which are volatile in presence of dry gas at high temperature.

5. Method as in any of claims 1 to 4, characterized in that for the first liquid, $SiCl_4$ is used.

6. Method as in any of claims 1 to 5, characterized in that for the second liquid, a chloride of germanium, aluminium or phosphor is used.

7. Method as in any of claims 1 to 6, characterized in that for the oxidant $H_2O$ is used.

8. Apparatus for producing optical fibre preforms, able to carry out the method of any of claims 1 to 7, said apparatus comprising a chamber (25, 29) for depositing the layers, means for evacuating residual gases by means of tubes (22, 23, 24), high temperature ovens to heat said preform for obtaining a solid cylindrical glass rod, means to generate a flow of a dehydrating material for residual water elimination and ovens for the complete preform vitrification, characterized in that the chamber for depositing the layers is connected with one or more tankes of compressed inert gas, communicating by valves (5, 6) and flow meters (3, 4), with vessels (7, 8) containing said first and second liquids which through confluent tubes (11, 12, 13, 14, 15) arrive at a first nozzle (16), contained within the chamber (25, 29) which constitutes a controlled-atmosphere chamber, said first nozzle being integral with a second nozzle (17) communicating by tubes (18, 19), a valve (20) and a flow meter (31) with a container of said oxidant under pressure, said first and second nozzles being directed to the same point on said cylindrical support surface (26, 28), and in addition means to provide relative rotation and translation between said cylindrical surface and said nozzles are provided.

## Revendications

1. Procédé pour la fabrication de préformes pour fibres optiques par dépôt de couches cylindriques successives de matériau vitrifiable, où chacune de ces couches est obtenue:

— en envoyant une première matière liquide, capable de fournir un matériau de base pour la formation du verre, sur une surface cylindrique de support dans une chambre à atmosphère contrôlée;
— en envoyant séparément un oxydant dans ladite chambre;
— en dirigeant cette matière liquide de même que cet oxydant vers la surface cylindrique

de support et en y mettant la matière liquide en contact avec l'oxydant;

— en aspirant tout gaz résiduel de cette chambre;

— et après avoir ainsi obtenu un objet de verre à plusieurs couches, en éliminant de la préforme pas encore vitrifiée l'eau résiduelle, en chauffant cette préforme non vitrifiée jusqu'à lui faire prendre le forme d'une tige cylindrique pleine et en la chauffant jusqu'à la vitrification complète, caractérisé en ce que:

— outre la première matière liquide capable de fournir le materiau de base pour la formation du verre une seconde matière liquide, capable de fournir un matériau de dopage pour la variation de l'indice de réfraction du verre, est aussi dirigée vers la surface de support cylindrique et elle est mise en contact avec la première matière liquide et l'oxidant lorsque l'on effectue un rotation et une translation entre la surface de support cylindrique et les moyens capables de diriger les matières liquides et l'oxidant vers la surface de support cylindrique à température ambiante pour obtenir un dépôt uniforme de ces matériaux;

— en modifiant le rapport du flux entre ces première et seconde matières liquides en fonction du profil de l'indice de réfraction requis.

2. Procédé selon la revendication 1, caractérisé en ce que la préforme est délivrée de ladite surface cylindrique de support avant la vitrification complète.

3. Procédé selon les revendications 1 ou 2, caractérisé en ce que ladite surface cylindrique de support est mise en rotation autour de son axe à une vitesse telle que ledit matériau de base et ledit matériau de dopage lui adhèrent fortement.

4. Procédé selon une quelconque des revendications 1 à 3, caractérisé en ce que l'eau résiduelle est enlevée par réaction chimique au moyen d'un déshydratant dont les produits de transformation sont volatils en présence de gaz sec à température élevée.

5. Procédé selon une quelconque des revendications 1 à 4, caractérisé en ce que l'on emploie du $SiCl_4$ pour la première matière liquide.

6. Procédé selon une quelconque des revendications 1 à 5, caractérisé en ce que l'on emploie du chlorure de germanium, d'aluminium ou de phosphore pour la seconde matière liquide.

7. Procédé selon une quelconque des revendications 1 à 6, caractérisé en ce que l'on emploie du $H_2O$ pour l'oxydant.

8. Appareil pour la production de préformes pour fibres optiques, apte à réaliser le procédé d'une quelconque des revendications 1 à 7, qui est composé d'une chambre (25, 29) pour déposer les couches, des moyens capables d'aspirer les gaz résiduéls par des tuyaux (22, 23, 24), des fours à température élevée pour le chauffage de cette préforme afin d'obtenir une tige cylindrique pleine, des moyens aptes à engendrer un flux dudit déshydratant pour enlever l'eau résiduelle aussi bien que des fours pour la vitrification complète de la préforme, caractérisé en ce que la chambre pour déposer les couches est connectée avec un ou plusieurs réservoirs de gaz inerte comprimé, mis en communication au moyen de soupapes (5, 6) et de mesureurs de débit (3, 4) avec des réservoirs (7, 8) qui contienent lesdites première et seconde matières liquides, qui, au moyen des tuyaux convergents (11, 12, 13, 14, 15) arrivent à une première tuyère (16), qui est placée dans la chambre (25, 29), qui constitue une chambre à atmosphère contrôlée, et qui est solidaire d'une seconde tuyère (17) en communication au moyen des tuyaux (18, 19), une soupape (20) et un mesureur de débit (31) avec un réservoir dudit oxydant sous pression, ces première et seconde tuyères étant dirigées vers le même point d'une surface cylindrique de support (26, 28), et en outre des moyens capables d'effectuer une rotation et une translation relative entre ces tuyaux et cette surface cylindrique sont fournis.

**Patentansprüche**

1. Verfahren zur Herstellung von Vorformen für optische Fasern durch Auflage mehrerer zylindrischer Lagen verglasbaren Materials, wobei man jede Lage durch die folgenden Schritte bildet:

— man verbringt eine erste Flüssigkeit, die zum Abgeben eines konstituierenden Materials für die Glasherstellung geeignet ist, auf einen Träger mit zylindrischer Oberfläche innerhalb einer Kammer unter gesteuerter Atmosphäre;

— man leitet getrennt ein Oxidationsmittel in die Kammer ein;

— man verbringt die Flüssigkeit zusammen mit dem Oxidationsmittel auf die zylindrische Fläche des Trägers, wo man die Flüssigkeit und das Oxidationsmittel in Kontakt miteinander bringt;

— man evakuiert alles restliche Gas aus der Kammer;

— man eliminiert nach der so verlaufenen Fertigstellung eines mehrschichtigen Glaskörpers Restwasser aus der noch unverglasten Vorform, erwärmt diese unverglaste Vorform so, daß sie zu einer festen zylindrischen Stange kolladiert, und erwärtmt sie bis zur vollständigen Verglasung, dadurch gekennzeichnet, daß

— man nebst der ersten Flüssigkeit, die sich zum Abgeben des konstituierenden Materials für die Glasherstellung eignet, außerdem eine zweite Flüssigkeit, die sich zum Abgeben eines Dotierungsmaterials für

die Änderungen des Brechungsindex eignet, auf die zylindrisch Trägerfläche aufbringt und in Kontakt mit der ersten Flüssigkeit und dem Oxidationsmittel bringt, während man eine relative Rotation und Querbewegung zwischen der zylindrischen Trägerfläche und der die Flüssigkeiten und das Oxidationsmittel zur zylindrischen Trägerfläche verbringenden Einrichtung bei Raumtemperatur bewirkt und so einen gleichförmigen Überzug mit den Materialien schafft;

— und man die Flußbeziehung zwischen der ersten und der zweiten Flüssigkeit als Funktion des geforderten Brechungsindexprofils verändert.

2. Verfahren nach Anspruch 1, dadurch gekennzeichnet, daß man die zylindrische Trägerfläche von der Vorform vor der vollständigen Verglasung entfernt.

3. Verfahren nach Anspruch 1 oder 2, dadurch gekennzeichnet, daß man die zylindrische Trägerfläche mit einer solchen Drehzahl um ihre Achse dreht, daß das Komponentenmaterial und das Dotierungsmaterial fest an ihr anhaften.

4. Verfahren nach einem der Ansprüche 1 bis 3, dadurch gekennzeichnet, daß man Restwasser durch chemische Reaktion mit einem dehydrierenden Material beseitigt, dessen Umwandlungsprodukte in Gegenwart von trockenem Gas bei hoher Temperatur flüchtig sind.

5. Verfahren nach einem der Ansprüche 1 bis 4, dadurch gekennzeichnet, daß man als die erste Flüssigkeit $SiCl_4$ verwendet.

6. Verfahren nach einem der Ansprüche 1 bis 5, dadurch gekennzeichnet, daß man als die zweite Flüssigkeit ein Chlorid von Germanium, Aluminium oder Phosphor verwendet.

7. Verfahren nach einem der Ansprüche 1 bis 6, dadurch gekennzeichnet, daß man als Oxidationsmittel $H_2O$ verwendet.

8. Vorrichtung zum Herstellen von Vorformen für optische Fasern zur Durchführung des Verfahrens nach einem der Ansprüche 1 bis 7, mit einer Kammer (25, 29) zum Niederschlagen der Lagen, einer Einrichtung zum Evakuieren restlicher Gase mit Hilfe von Rohren (22, 23, 24), Hochtemperaturöfen, die die Vorform zum Erhalten einer festen zylindrischen Glasstange aufheizen, einer Einrichtung zum Erzeugen eines Stroms von dehydrierendem Material für die Restwassereleminierung und mit Öfen für die vollständige Verglasung der Vorform, dadurch gekennzeichnet, daß die Kammer zur Auflage der Lagen mit einem oder mehreren Tanks verdichteten inerten Gases verbunden ist, der bzw. die über Ventile (5, 6) und Durchflußmesser (3, 4) mit Gefäßen (7, 8) kommunizieren, welche die erste bzw. die zweite Flüssigkeit enthalten, welche Flüssigkeiten über zusammenfließende Rohrleitungen (11, 12, 13, 14, 15) an einer ersten Düse (16) eintreffen, die in der eine Kammer (25, 29) mit gesteuerter Atmosphäre darstellenden Kammer angeordnet ist und eine Einheit mit einer zweiten Düse (17) bildet, die über eine Rohrleitung (18, 19), ein Ventil (20) und einen Durchflußmesser (31) mit einem Behälter des Oxidationsmittels unter Druck kommuniziert, wobei die erste und die zweite Düse auf denselben Punkt einer zylindrischen Trägerfläche (26, 28) gerichtet sind; und daß sie mit Einrichtungen zum relativen Rotieren und Querbewegen zwischen der zylindrischen Fläche (26, 28) und den Düsen verbunden ist.

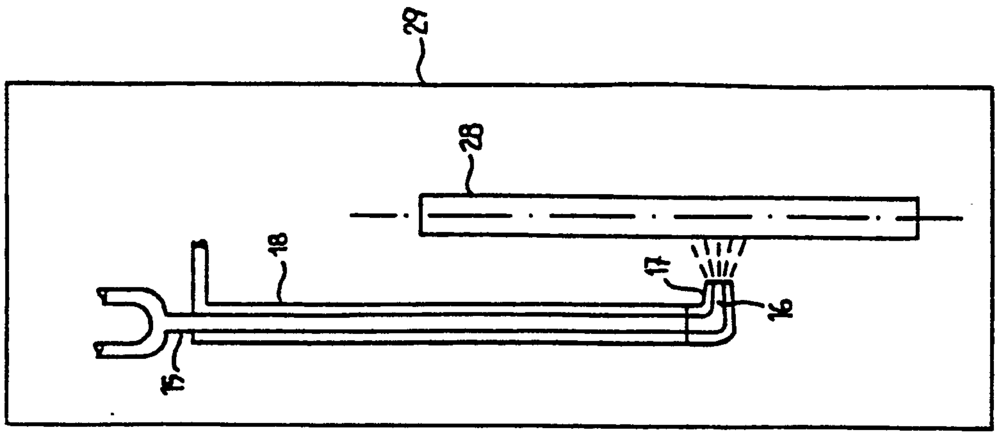


Fig.2

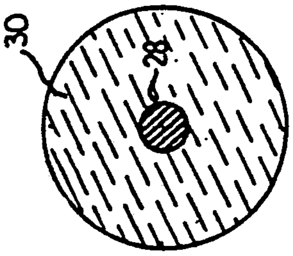


Fig.4

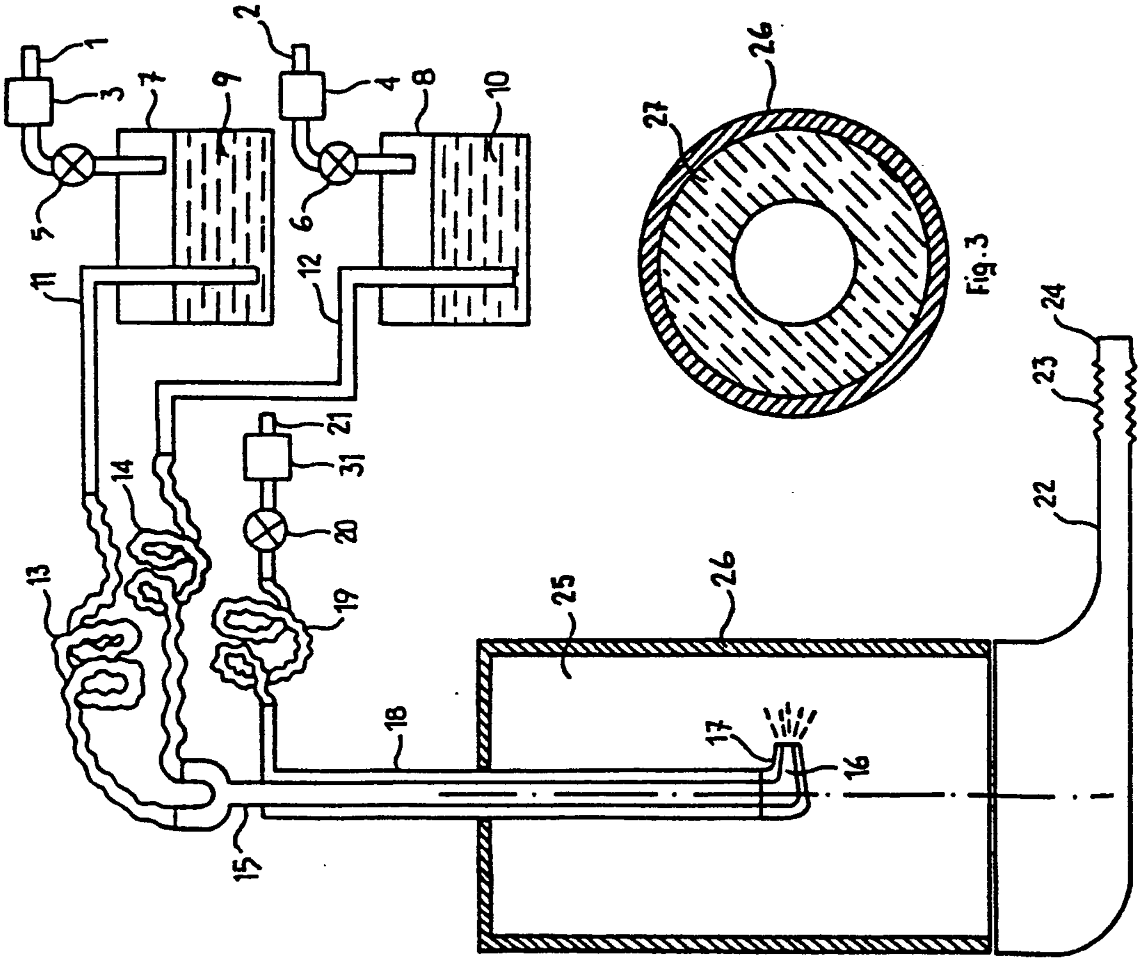


Fig.3

Fig.1